# EUROPÄISCHE PATENTSCHRIFT

(11) **EP 2 750 482 B1**
(45) Veröffentlichungstag und Bekanntmachung des Hinweises auf die Patenterteilung: **01.03.2017**
(21) Anmeldenummer: 13306703.3
(22) Anmeldetag: 12.12.2013
(51) Int. Cl.: H05B 37/02

(54) **Elektrisches Gerät**
Electric device
Appareil électrique

(30) Priorität: 27.12.2012 DE 102012224438
(43) Veröffentlichungstag der Anmeldung: 02.07.2014
(73) Patentinhaber: Schneider Electric Industries SAS, 92500 Rueil-Malmaison (FR)
(72) Erfinder: KUHNERT, Jürgen, 51702 Bergneustadt (DE)
(74) Vertreter: Manitz, Finsterwald & Partner GbR

(56) Entgegenhaltungen:
- EP-B1- 1 353 538
- DE-A1- 10 005 948
- DE-A1- 10 227 435
- DE-A1-102008 063 195
- DE-A1-102009 013 289
- GB-A- 2 164 443
- US-A- 6 160 353
- US-A1- 2013 040 471
- US-A1- 2013 257 293

## Beschreibung

Die vorliegende Erfindung betrifft ein elektrisches Gerät mit helligkeitsabhängiger Abschaltung, umfassend ein lichtempfindliches Element und eine Steuerschaltung, die an eine Versorgungsspannung angeschlossen ist, und die ein Stellglied ansteuert (vgl. DE 102 27 435 A1).

Derartige elektrische Geräte sind auch in Form von Steckdosen mit Nachtbeleuchtung bekannt, die sich bei Unterschreiten einer bestimmten Helligkeit selbsttätig aktiviert.

Aus der US 6,160,353 A ist ein elektrisches Gerät mit helligkeitsabhängiger Abschaltung bekannt, das ein lichtempfindliches Element in Form einer Fotozelle umfasst, die an eine Steuerschaltung angeschlossen ist, welche mehrere Transistoren, Widerstände und Dioden umfasst. Mit Hilfe der Steuerschaltung kann ein Stellglied in Form eines Relais angesteuert werden. Bei Erreichen einer kalibrierbaren Schaltspannung wird ein Transistor in der Steuerschaltung leitend und schaltet einen zweiten Transistor ab, der das Relais stromlos schaltet.

Es ist die Aufgabe der vorliegenden Erfindung, ein elektrisches Gerät mit einer Steuerschaltung zu schaffen, das einen reduzierten Energieverbrauch aufweist.

Die Lösung dieser Aufgabe erfolgt durch die Merkmale des Anspruchs 1.

Die Erfindung beruht auf der Erkenntnis, dass bestimmte elektrische Geräte, wie beispielsweise Dimmer oder auch Bewegungsmelder über längere Zeiträume gar nicht benötigt werden, nämlich wenn die Umgebungshelligkeit ausreichend hoch ist. Erst bei Erreichen einer bestimmten Mindesthelligkeit wird es erforderlich, den Dimmer oder den Bewegungsmelder in Betrieb zu setzen. Erfindungsgemäß ist deshalb die Schalteinrichtung vorgesehen, die durch das lichtempfindliche Element betätigbar ist, um die Steuerschaltung zu deaktivieren.

Für den beispielhaft genannten Fall einer Dimmerschaltung kann das lichtempfindliche Element bei ausreichender Umgebungshelligkeit die Schalteinrichtung betätigen, so dass die Steuerschaltung deaktiviert wird, indem eine Verbindung zwischen der Steuerschaltung und ihrer Versorgungsspannung unterbrochen wird. Hierdurch verbraucht die Steuerschaltung keine elektrische Energie. Erst wenn die Umgebungshelligkeit unter einen Schwellwert abgesunken ist, wird die Schalteinrichtung geschlossen und dadurch die Steuerschaltung aktiviert bzw. in ihren Bereitschaftszustand versetzt, indem die Steuerschaltung mit elektrischer Energie versorgt wird.

Das Gleiche gilt für den Fall eines Bewegungsmelders, der beispielsweise zum Einschalten einer Außenbeleuchtung dient. Auch hier wird ein Bereitschaftszustand der Steuerschaltung nur dann benötigt, wenn die Umgebungshelligkeit unter einen Schwellwert gesunken ist.

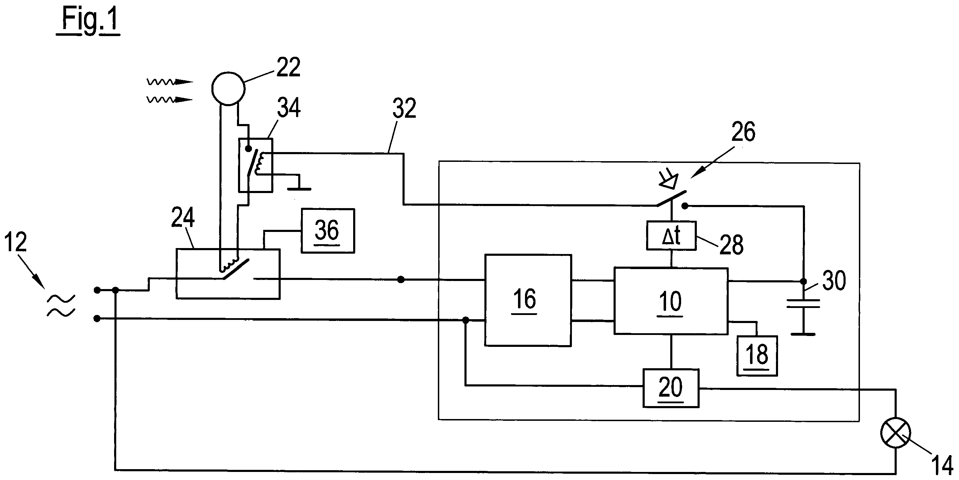

Vorteilhafte Ausführungsformen der Erfindung werden in der Beschreibung, der Zeichnung sowie den Unteransprüchen beschrieben.

Nach einer vorteilhaften Ausführungsform kann das lichtempfindliche Element eine Photozelle sein, die bei Belichtung mit Tageslicht bzw. mit ausreichendem Umgebungslicht eine zum Schalten der Schalteinrichtung ausreichende Spannung erzeugt. Die Schalteinrichtung kann beispielsweise ein Relais oder ein Transistor oder ein anderes elektronisches Schaltelement sein.

Nach einer weiteren vorteilhaften Ausführungsform kann eine Einstelleinrichtung vorgesehen sein, mit welcher der Schaltpunkt der Schalteinrichtung eingestellt werden kann. Auf diese Weise lässt sich der gewünschte Schwellwert zum Einschalten des Bereitschaftszustands der Steuerschaltung verändern.

Nach einer weiteren vorteilhaften Ausführungsform kann die Steuerschaltung eine eigene Spannungsversorgung aufweisen, die beispielsweise eine Batterie, einen Gleichrichter und/oder einen Spannungsregler umfasst. Durch Deaktivieren der Steuerschaltung werden diese Bauteile stromlos gemacht, so dass der Energieverbrauch reduziert werden kann, da die Steuerschaltung nur dann in ihren Bereitschaftszustand versetzt wird, wenn eine Wahrscheinlichkeit besteht, dass diese überhaupt benötigt wird.

Nach einer weiteren vorteilhaften Ausführungsform kann eine Auslöseeinrichtung vorgesehen sein, mit der die Schalteinrichtung manuell betätigbar ist. Auf diese Weise kann die Steuerschaltung auch dann aktiviert werden, wenn die Schalteinrichtung durch ausreichende Belichtung des lichtempfindlichen Elements betätigt worden ist. Im Fall einer Dimmerschaltung kann es beispielsweise wünschenswert sein, nach eingeschalteter Raumbeleuchtung eine Dimmung vorzunehmen. Da in diesem Fall die Steuerschaltung normalerweise deaktiviert wäre, wäre an sich ein Dimmvorgang nicht möglich. Durch manuelles Betätigen der Schalteinrichtung lässt sich in diesem Fall jedoch dennoch ein Dimmvorgang durchführen. In diesem Zusammenhang kann es vorteilhaft sein, bei einem manuellen Betätigen der Auslöseeinrichtung die Schalteinrichtung für eine vorbestimmte Zeitdauer zu aktivieren, um dem Benutzer für den Dimmvorgang ausreichend Zeit zu geben.

Nachfolgend wird die vorliegende Erfindung rein beispielhaft anhand einer vorteilhaften Ausführungsform und unter Bezugnahme auf die beigefügte Zeichnung beschrieben.

Die Figur zeigt eine schematische Darstellung eines elektrischen Geräts mit helligkeitsabhängiger Abschaltung am Beispiel einer Dimmerschaltung. Die Figur zeigt schematisch ein elektrisches Gerät in Form eines Dimmers mit einer Steuerschaltung 10, die an eine Versorgungsspannung 12 angeschlossen ist. Für die Steuerschaltung 10 werden Spannungen von unterhalb von 10 V benötigt, während die für eine Last 14 benötigte Netzspannung ca. 240 V beträgt. Aus diesem Grund ist für die Steuerschaltung 10 eine eigene Spannungsversorgung 16 vorgesehen, mit der die netzseitige Spannung 12 heruntertransformiert wird.

Die Steuerschaltung 10 kann mit Hilfe eines Reglers 18 eingestellt werden, um die Last 14 zu dimmen. Hierzu steuert die Steuerschaltung 10 ein Stellglied 20 an, das auf grundsätzlich bekannte Weise die gewünschte Dimmung einstellt.

Um die Steuerschaltung 10 und deren Spannungsversorgung 16 zu deaktivieren, ist ein lichtempfindliches Element in Form beispielsweise einer Solarzelle 22 vorgesehen, die bei ausreichender Belichtung eine Schalteinrichtung 24 betätigt. Hierdurch wird die Steuerschaltung 10 bzw. die Spannungsversorgung 16 von der Versorgungsspannung 12 getrennt und dadurch deaktiviert. Wenn die Belichtung der Solarzelle 12 nicht mehr ausreichend ist, schließt die Schalteinrichtung 24, so dass die Steuerschaltung 10 bzw. die Spannungsversorgung 16 mit elektrischer Energie versorgt werden und dadurch in den Bereitschaftszustand übergehen.

Für ein manuelles Aktivieren des Bereitschaftszustands ist eine Auslöseeinrichtung in Form eines Tasters 26 vorgesehen, der über ein Zeitglied 28 von der Steuereinrichtung 10 für eine vorbestimmte Zeitdauer, beispielsweise 5 s, gehalten wird. Durch Schließen des Tasters 26 wird ein Kondensator 30, der zuvor von der Steuereinrichtung 10 aufgeladen wurde, über eine Leitung 32 entladen, die an die Spule eines Relais 34 angeschlossen ist, so dass die Spule mit Strom beaufschlagt wird und dadurch den Stromfluss zwischen der Solarzelle 22 und der Schalteinrichtung 24 unterbricht. Hierdurch wird die Schalteinrichtung 24 geschlossen und die Steuereinrichtung 10 wird mit Strom versorgt, so dass für die vorbestimmte Zeitdauer eine Dimmung vorgenommen werden kann. Nach Abfallen des Relais unterbricht die Schalteinrichtung 24 wieder die Stromversorgung für die Steuereinrichtung 10, so dass die Last 14 mit dem zuletzt gewählten Dimmungszustand betrieben wird, ohne dass jedoch die Steuereinrichtung 10 und die Spannungsversorgung 16 Energie verbrauchen.

Der Schaltpunkt der Schalteinrichtung 24, d.h. der Schwellwert der erforderlichen Beleuchtungsstärke, um die Schalteinrichtung 24 zu betätigen, kann durch eine Einstelleinrichtung 36 eingestellt werden.

## Patentansprüche

1. Elektrisches Gerät mit helligkeitsabhängiger Abschaltung, umfassend ein lichtempfindliches Element (22) und eine Steuerschaltung (10), die an eine Versorgungsspannung (12) angeschlossen ist, und die ein Stellglied (20) ansteuert,
**dadurch gekennzeichnet, dass**
durch das lichtempfindliche Element eine Schalteinrichtung (24) betätigbar ist, mit der die Steuerschaltung (10) deaktiviert wird, indem die Schalteinrichtung (24) eine Verbindung zwischen der Steuerschaltung (10) und der Versorgungsspannung (12) unterbricht.

2. Elektrisches Gerät nach Anspruch 1,
**dadurch gekennzeichnet, dass**
das Stellglied (20) Bestandteil einer Dimmerschaltung ist.

3. Elektrisches Gerät nach Anspruch 1,
**dadurch gekennzeichnet, dass**
das Stellglied (20) Bestandteil eines Bewegungsmelders ist.

4. Elektrisches Gerät nach einem der vorstehenden Ansprüche,
**dadurch gekennzeichnet, dass**
das lichtempfindliche Element eine Photozelle (22) ist, die bei Belichtung eine zum Schalten der Schalteinrichtung (24) ausreichende Spannung erzeugt.

5. Elektrisches Gerät nach einem der vorstehenden Ansprüche,
**dadurch gekennzeichnet, dass**
eine Einstelleinrichtung (36) vorgesehen ist, mit welcher der Schaltpunkt der Schalteinrichtung (24) eingestellt werden kann.

6. Elektrisches Gerät nach einem der vorstehenden Ansprüche,
**dadurch gekennzeichnet, dass**
die Steuerschaltung (10) eine eigene Spannungsversorgung (16) aufweist.

7. Elektrisches Gerät nach einem der vorstehenden Ansprüche,
**dadurch gekennzeichnet, dass**
eine Auslöseeinrichtung (26, 34) vorgesehen ist, mit der die Schalteinrichtung (24) manuell betätigbar ist.

8. Elektrisches Gerät nach Anspruch 7,
**dadurch gekennzeichnet, dass**
die Schalteinrichtung (24) bei Betätigen der Auslöseeinrichtung (26) 34) nur für eine vorbestimmte Zeitdauer aktiviert wird.

## Claims

1. An electrical device having a deactivation dependent on brightness and comprising a light-sensitive element (22) and a control circuit (10) which is connected to a supply voltage (12) and which controls an actuator (20),
**characterized in that**
a switching device (24) by which the control circuit (10) is deactivated can be actuated by the light-sensitive element **in that** the switching device (24) interrupts a connection between the control circuit (10) and the supply voltage (12) .

2. An electrical device in accordance with claim 1,
**characterized in that**
the actuator (20) is a component of a dimmer circuit.

3. An electrical device in accordance with claim 1,
**characterized in that**
the actuator (20) is a component of a motion sensor.

4. An electrical device in accordance with any one of the preceding claims,
**characterized in that**
the light-sensitive element is a photocell (22) which on exposure to light generates a voltage which is sufficient for switching the switching device (24).

5. An electrical device in accordance with any one of the preceding claims,
**characterized in that**
a setting device (36) is provided by which the switching point of the switching device (24) can be set.

6. An electrical device in accordance with any one of the preceding claims,
**characterized in that**
the control circuit (10) has a separate voltage supply (16).

7. An electrical device in accordance with any one of the preceding claims,
**characterized in that**
a triggering device (26, 34) is provided by which the switching device (24) can be actuated manually.

8. An electrical device in accordance with claim 7,
**characterized in that**
the switching device (24) is only activated for a predetermined period on actuation of the triggering device (26, 34).

## Revendications

1. Appareil électrique à coupure en dépendance de la luminosité, comportant un élément photosensible (22) et un circuit de commande (10) raccordé à une tension d'alimentation (12) et pilotant un actionneur (20),
**caractérisé en ce que**
un moyen de commutation (24) est susceptible d'être actionné par l'élément photosensible, par lequel le circuit de commande (10) est désactivé du fait que le moyen de commutation (24) interrompt une connexion entre le circuit de commande (10) et la tension d'alimentation (12).

2. Appareil électrique selon la revendication 1,
**caractérisé en ce que**
l'actionneur (20) fait partie d'un circuit variateur.

3. Appareil électrique selon la revendication 1,
**caractérisé en ce que**
l'actionneur (20) fait partie d'un détecteur de mouvement.

4. Appareil électrique selon l'une des revendications précédentes,
**caractérisé en ce que**
l'élément photosensible est une photocellule (22) qui, en cas d'illumination, génère une tension suffisante pour commuter le moyen de commutation (24).

5. Appareil électrique selon l'une des revendications précédentes,
**caractérisé en ce que**
il est prévu un moyen de réglage (36) permettant de régler le point de commutation du moyen de commutation (24).

6. Appareil électrique selon l'une des revendications précédentes,
**caractérisé en ce que**
le circuit de commande (10) présente une propre alimentation en tension (16).

7. Appareil électrique selon l'une des revendications précédentes,
**caractérisé en ce que**
il est prévu un moyen de déclenchement (26, 34) permettant d'actionner manuellement le moyen de commutation (24).

8. Appareil électrique selon la revendication 7,
**caractérisé en ce que**
lors d'un actionnement du moyen de déclenchement (26, 34), le moyen de commutation (24) n'est activé que pendant une période temporelle prédéterminée.
